# EUROPEAN PATENT SPECIFICATION

(11) **EP 3 255 383 B1**
(45) Date of publication and mention of the grant of the patent: **11.11.2020**
(21) Application number: 17174225.7
(22) Date of filing: 02.06.2017
(51) Int. Cl.: G01C 21/26, B60W 40/076, G01S 13/931, G06K 9/00

(54) **METHOD FOR RECOGNIZING AN INCLINATION IN A ROADWAY FOR A MOTOR VEHICLE, DRIVER ASSISTANCE SYSTEM AS WELL AS MOTOR VEHICLE**
VERFAHREN ZUM ERKENNEN EINER NEIGUNG EINER STRASSE FÜR EIN KRAFTFAHRZEUG, FAHRERASSISTENZSYSTEM SOWIE KRAFTFAHRZEUG
PROCÉDÉ DE RECONNAISSANCE D'UNE INCLINAISON DANS UNE CHAUSSÉE POUR UN VÉHICULE AUTOMOBILE, SYSTÈME D'ASSISTANCE CONDUCTEUR AINSI QUE VÉHICULE AUTOMOBILE

(30) Priority: 07.06.2016 DE 102016110461
(43) Date of publication of application: 13.12.2017
(73) Proprietor: Connaught Electronics Ltd., Tuam, County Galway (IE)
(72) Inventor: Westhues, Andreas, 09366 Stollberg (DE); Hughes, Ciaran, Tuam, County Galway (IE); Horgan, Jonathan, Tuam, County Galway (IE)
(74) Representative: Jauregui Urbahn, Kristian

(56) References cited:
- JP-A- 2009 139 325
- US-A1- 2009 041 337
- US-A1- 2009 103 781
- US-A1- 2010 299 109

## Description

The invention relates to a method for recognizing an inclination in a first roadway area with respect to a second roadway area adjoining to the first roadway area, on which a motor vehicle is located, wherein in a predetermined direction starting from the motor vehicle the first roadway area is disposed situated in front of the second roadway area. In addition, the invention relates to a driver assistance system as well as to a motor vehicle with a driver assistance system.

Presently, the interest is directed to driver assistance systems for motor vehicles, which serve for assisting a driver of the motor vehicle in driving the motor vehicle. Therein, driver assistance systems are known from the prior art, which for example have a capturing device, by which an environmental region of the motor vehicle can be captured. In particular, it can be examined by the capturing device if an object or an obstacle for the motor vehicle is in the environmental region of the motor vehicle. Based on the environmental data captured by the capturing device, the environmental data associated with the object can be extracted and thereby the object can be captured. For example, an image or an image sequence of the environmental region can be provided by a capturing device in the form of a camera. With the aid of a corresponding object recognition algorithm, the obstacle in the environmental region of the motor vehicle can then be recognized.

In the methods used heretofore for recognizing objects, it is usually assumed that the motor vehicle moves on a flat roadway. In the object recognition method, for example, individual environmental points are captured. All of the environmental points, the height coordinates of which fall below a predetermined threshold value, are interpreted as so-called ground points, which are associated with a ground or a roadway surface of the motor vehicle. The environmental points, the height coordinates of which are greater than the threshold value, are recognized as object points and a spatial position of the object in the environmental region is determined based on coordinates of the object points.

However, problems arise if a roadway area located, for example, in front of the motor vehicle in direction of travel has an inclination, which is different from an inclination of the roadway area, on which the motor vehicle is located. Namely, here, it can occur that depending on the inclination ground points are erroneously recognized as object points or object points are erroneously associated with ground points. Hereto,

DE 10 2011 118 171 A1 describes a method for continuously estimating a roadway plane of a motor vehicle from image sequences of an image capturing device. Therein, current 3D points of the ambient of the motor vehicle are determined from the current image of the image sequence. Then, preselection is effected, in which all of the 3D points are selected, which could belong to the roadway plane. Therein, the preselection is effected with respect to the horizontal and the vertical component of the 3D points. Based on this preselected amount, the roadway plane is estimated. US 2010/0299109 A1 discloses a road shape recognition device, which uses cameras to detect the distance to points on a road, and their respective heights.

JP 2009-139325, US 2009/010378 A1 and US 2009/0041337 A1 all describe similar arrangements for estimating the slope of a road using cameras.

It is the object of the present invention to demonstrate a solution, how an inclination in a roadway for a motor vehicle can be recognized in particularly simple and reliable manner.

According to the invention, this object is solved by a method, a driver assistance system as well as a motor vehicle comprising the features according to the respective independent claims. Advantageous embodiments of the invention are the subject matter of the dependent claims, of the description and of the figures.

A method according to the invention serves for recognizing an inclination in a first roadway area with respect to a second roadway area adjoining to the first roadway area, on which a motor vehicle is located. Therein, in a predetermined direction starting from the motor vehicle, the first roadway area is disposed situated in front of the second roadway area. In the method, the first roadway area is divided into a predetermined number of stripes along the predetermined direction. Environmental points captured by a vehicle-side capturing device are each associated with one of the stripes based on their distance coordinates describing a distance of the respective environmental point to the motor vehicle. In addition, a height value is respectively determined for the stripes based on height coordinates of the environmental points associated with the stripe, a slope value between the associated height values is respectively determined along the predetermined direction for respective stripe pairs comprising two stripes and the inclination is recognized if at least one of the determined slope values exceeds a predetermined first slope limit value.

Thus, it can be examined by means of the method if an inclination or an inclined plane is in the first roadway area. Otherwise stated, it is to be examined if at least a partial area in the first roadway area is inclined with respect to the second roadway area. In particular, the predetermined direction is a viewing direction of the capturing device. The vehicle-side capturing device can, for example, comprise a camera and/or a radar sensor and/or an ultrasonic sensor. The predetermined direction can, for example, be oriented along a vehicle longitudinal direction, in particular a direction of travel, of the motor vehicle. For this purpose, the capturing device can, for example, comprise a front camera and/or a rear camera of the motor vehicle. Here, the first roadway area is in front of the second roadway area in direction of travel of the motor vehicle, which is oriented along a vehicle longitudinal direction. If the motor vehicle travels in forward direction, thus, the first roadway area is in front of the motor vehicle. If the motor vehicle travels in rearward direction, thus, the first roadway area is behind the motor vehicle. The predetermined direction can also, for example, be oriented along a vehicle transverse direction or vehicle transverse axis of the motor vehicle. For this purpose, the capturing device can, for example, feature at least one side camera, which is arranged at side mirrors or in place of side mirrors of the motor vehicle at the motor vehicle. Therein, the second roadway area, on which the motor vehicle is located, is in a plane, which is spanned by the vehicle transverse direction and the vehicle longitudinal direction and which forms a reference plane or a horizontal plane. If the first roadway area has the inclination, thus, the first roadway area is tilted or inclined with respect to this reference plane at least in certain areas. Therein, the inclination can be an ascent or a descent within the first roadway area. The inclined partial area can for example be a ramp in a multi-level parking garage. However, the inclined partial area can also be an inclination in a parking space, in particular a longitudinal parking space, for the motor vehicle.

Now, in order to capture or recognize the presence of this inclination or of the first roadway area inclined at least in certain areas, the first roadway area is divided into the predetermined number of stripes along the predetermined direction, i.e. for instance along the direction of travel and/or the vehicle transverse direction. Therein, the stripes extend transversely to the predetermined direction or transversely to the first roadway area, in particular perpendicularly to the predetermined direction. Therein, the first roadway area is in particular divided into identically sized stripes. A first stripe can be determined adjoining to the second roadway area and therein have a first distance to the motor vehicle. A second stripe can be determined adjoining to the first stripe and have a second distance to the motor vehicle, etc. Otherwise stated, with increasing index number of the stripes, a distance of the stripes to the motor vehicle increases. Therein, the stripes are in particular defined situated in the reference plane such that the first roadway area is horizontally divided into the stripes. Preferably, at least ten stripes are preset as the number of stripes. In particular, a width between 45 centimeters and 1 meter, preferably 50 centimeters, is determined for each of the stripes along the predetermined direction. Thus, the second roadway area has an extension of 5 meters in the predetermined direction.

The environmental points or 3D points captured by the vehicle-side capturing device are associated with these stripes. Therein, the environmental points are in particular environmental points in the first roadway area and therein in particular include ground points, which can be associated with a surface of the first roadway area. The environmental points can be indicated in coordinates of a vehicle coordinate system, wherein the horizontal coordinates or distance coordinates of an environmental point are associated with the vehicle longitudinal direction and the vehicle transverse direction of the vehicle coordinate system. Therein, both a distance of the environmental point to the motor vehicle and a direction of the environmental point with respect to the motor vehicle are indicated by the horizontal coordinates. Otherwise stated, a position of the environmental point in the horizontal plane or in the plane of the second roadway area is indicated by the horizontal coordinates. The vertical coordinate or height coordinate of an environmental point is associated with a vehicle vertical direction of the vehicle coordinate system. A distance of an environmental point in the vehicle vertical direction to the reference plane is described by the height coordinate, thus a height of the environmental point above the second roadway area.

The stripes are filled by sorting the captured environmental points into the respective stripes based on their distance coordinates. In addition, for each stripe, a height value is determined based on the height coordinates of the environmental points associated with the stripe. By the height value, the height coordinates of all of the environmental points associated with this stripe can be taken into account. With an inclination in the form of a positive slope or an ascent in the first roadway area, thus, a continuous increase of the height values arises with increasing index number of the stripes.

In order to recognize the inclination, thus for example to recognize the continuous increase of the height values, the slope value is determined for respectively at least two stripes. Therein, the slope value can be determined in pairs for in particular adjoining or adjacent stripes. If the determined slope value exceeds the first slope limit value in at least one stripe pair, the inclined partial area is recognized and thus it is assumed that the first roadway area is inclined at least partially or at least in certain areas. Therein, as the slope value, for example the slope of a straight line can be determined, which extends through the two height values associated with the stripes along the predetermined direction starting from the motor vehicle. Therein, a value of 5 % is preferably determined as the first slope limit value. This means that the first roadway area inclined at least in certain areas is recognized if the determined slope value between the height values of at least two stripes is greater than 5 %.

Thus, the presence or the existence of the inclined first roadway area can be recognized in particularly simple and fast manner by means of the method. In the case of the first roadway area, for example the ramp, which is situated in front of the motor vehicle along the direction of travel of the motor vehicle, it can thus be prevented that the ramp is erroneously recognized as an obstacle and the motor vehicle is prevented from driving onto it. In the case of the first roadway area situated beside the motor vehicle along the vehicle transverse direction of the motor vehicle, for example the ramp in a free longitudinal parking space, it can be prevented that during the passing of the parking space by the motor vehicle the ramp is erroneously recognized as an obstacle, the parking space is erroneously identified as filled or occupied and thus an automatic parking process of the motor vehicle is not performed.

Preferably, the stripes are determined rectangular and extending perpendicularly to the predetermined direction. Thus, each stripe is bounded by two lines extending perpendicularly to the predetermined direction, wherein a first line constitutes a front edge of the stripe and a second line constitutes the rear edge of the stripe. In the case of the first roadway area situated in front of the second roadway area in the direction of travel of the motor vehicle, the stripes are thus, for example, bounded by two lines extending parallel to the vehicle transverse direction. With stripes adjoining to each other, the rear edge of a first stripe at the same time constitutes the front edge of a second stripe located behind the first stripe viewed from the motor vehicle. Thus, the method is particularly simply configured since the environmental points can be assigned to the respective stripe in particularly fast manner, in particular based on the distance coordinates associated with the vehicle longitudinal direction and/or vehicle transverse direction.

Preferably, starting from the motor vehicle along the predetermined direction, the respective slope value is consecutively determined for each one stripe pair comprising two stripes adjoining to each other and the inclination is recognized as soon as the slope value exceeds the first slope limit value for the first time. This means that the stripes are considered in pairs along the predetermined direction and the slope value is consecutively or successively determined for each stripe pair. Therein, for example the slope value is determined for a first stripe pair comprising a first stripe and a second stripe, which are closest to the motor vehicle. Only if the slope value falls below the first slope limit value for the first stripe pair, the slope value for a second stripe pair comprising the second stripe and a third stripe is determined and compared to the first slope limit value. As soon as the slope value therein exceeds the first slope limit value for the first time, the inclination is recognized. By iteratively determining the slope values and comparing the slope values to the first slope limit value, the method is particularly simply configured.

In a development of the invention, the stripe pair, in which the slope value exceeds the first slope limit value for the first time, is determined as a beginning of the inclination facing the second roadway area, in the predetermined direction starting from the beginning of the inclination, the respective slope value for each two stripes adjoining to each other is consecutively determined and the stripe pair, in which the slope value again falls below the first slope limit value for the first time, is determined as the end of the inclination. Thus, as soon as the slope value exceeds the slope limit value for the first time, the presence as well as the start or the beginning of the inclination are recognized at the same time. One of the stripes of that stripe pair, the slope value of which exceeds the first slope limit value for the first time, is therein determined as located at the beginning of the inclination. For example, the stripe of this stripe pair closer to the motor vehicle can be determined as located at the beginning of the inclination. Thus, a distance of the beginning of the inclination to the motor vehicle can for example be determined based on the stripe index of the stripe located at the beginning as well as the width of the stripes. From the beginning of the inclination, the slope values are again consecutively determined for two adjacent stripes. As soon as the slope value between two adjacent stripes again falls below the first slope limit value, the end of the inclination is recognized and one of the stripes of this stripe pair, for example the stripe located closer to the motor vehicle, is detected as the stripe located at the end of the inclination. Thus, a position of the end of the inclination with respect to the motor vehicle can for example be determined based on the stripe index of the stripe located at the end as well as based on the width of the stripes. If a stripe pair cannot be detected starting from the beginning of the inclination, the slope value of which again falls below the first slope limit value, thus, the stripe most distant from the motor vehicle, thus the stripe with the highest index, can be marked as the end of the inclination. By means of the method, thus, the presence of the inclination as well as the beginning and the end of the inclination are recognized at the same time. Thus, the method is particularly efficiently configured.

Alternatively thereto, for example, the slope values can be determined for all of the stripe pairs, and after determination of all of the slope values, from those stripe pairs, the slope value of which exceeds the first slope limit value, that stripe pair located at the beginning of the inclination can be identified, which has the lowest distance to the motor vehicle compared to the other stripe pairs, and that stripe pair located at the end of the inclination can be identified, which has the largest distance to the motor vehicle compared to the other stripe pairs. Here, the slope values are thus not consecutively determined and/or evaluated.

It proves advantageous if the slope values are determined for respective stripe pairs comprising two stripes adjoining to each other, an overall slope value is determined based on the slope values, which exceed the first slope limit value, an mean slope value is determined based on the overall slope value and the inclination is only recognized if the mean slope value falls below a predetermined second slope limit value. The overall slope value can for example be determined by summing up all of the slope values, which exceed the first slope limit value. For example, all of the slope values between the beginning and the end of the inclination recognized based on the at least one slope value exceeding the slope limit value, including the stripe located at the beginning and the stripe located at the end, can be summed up. However, the inclination is only confirmed if in addition to the at least one slope value exceeding the first slope limit value, the mean slope value falls below the second slope limit value. The second slope limit value can for example be 20 %. Thereby, it can be ensured that indeed an inclination and not for instance an obstacle, for example a wall, has been recognized based on the at least one slope value exceeding the first slope limit value.

Alternatively or additionally, the slope values for respective stripe pairs comprising two stripes adjoining to each other are determined, a maximum slope value is determined from the slope values, which exceed the first slope limit value, and the inclination is only recognized if the maximum slope value falls below a predetermined third slope limit value. The third slope limit value can for example also be 20 %. By the examination of the maximum slope value, it can also be ensured that indeed an inclination and not for example the obstacle, for example the wall, has been recognized based on the at least one slope value exceeding the first slope limit value. Thus, the method is particularly reliably configured.

Particularly preferably, after recognizing the inclination, an area of the inclination is determined based on the environmental points. According to this embodiment, thus, after recognizing the inclination, parameters of the inclination are determined. Thereto, based on the environmental points, the area or plane of the inclination, in particular a size of the area as well as a position of the area with respect to the second roadway area, is determined. The area or surface can be determined by regression calculation, for example by means of the least squares method. Therein, the area is determined as a flat area tilted with respect to the second roadway area, wherein the area for example extends from the determined position of the beginning of the inclination up to the determined position of the end of the inclination and therein has a slope, which corresponds to the determined overall slope value. Here, thus, all of the environmental points of those stripes associated with the inclination are advantageously used for determining the area or the plane.

In an advantageous embodiment of the invention, a dispersion measure is determined based on the environmental points and the area, and the area is classified as passable or impassable for the motor vehicle based on the dispersion measure. This means that so-called outliers can be detected, which are outside of a dispersion range determined by the dispersion measure, adjoining to the area. For example, a variance and/or a standard deviation of the environmental points can be determined as the dispersion measure. If the dispersion measure falls below a predetermined dispersion limit value, thus, the area is classified as drivable for the motor vehicle. Such an area is in particular a flat surface, for example in the form of a ramp in a multi-level parking garage and/or in a free parking space for the motor vehicle. If the dispersion measure exceeds the predetermined dispersion limit value, thus, the area is classified as impassable for the motor vehicle. Such an area impassable for the motor vehicle is in particular an uneven area. By this classification of the area, the driver assistance system can for example automatically brake the motor vehicle and thus prevent the motor vehicle from traveling onto the area impassable for the motor vehicle.

It proves advantageous if a line of best fit extending along the stripe is determined for each stripe depending on the height coordinates of the environmental points of the stripe and the height value is determined based on a point on the line of best fit. Therein, the line of best fit extends transversely to the predetermined direction. The line of best fit is determined by means of regression calculation from the height coordinates of the environmental points associated with a stripe. Therein, the line of best fit considers all of the height coordinates of the environmental points associated with the stripe. Otherwise stated, the line of best fit or regression line of a stripe approximates all of the environmental points associated with the stripe at the best. The height coordinate of a point on the line of best fit can therein be determined as the height value. For example, that point can respectively be determined in each line of best fit, which is on a vehicle axis extended in the predetermined direction. The height coordinate of this point can be determined as the height value. Therein, the slope value can be determined as the slope of the straight line, which perpendicularly intersects the lines of best fit of two adjacent stripes.

In particular, the line of best fit is determined depending on respective distance coordinates associated with the vehicle transverse direction and/or the vehicle longitudinal direction, and the height coordinates of the environmental points of the respective stripe extending in a vertical plane spanned by the vehicle transverse direction and the vehicle longitudinal direction. In other words, this means that the environmental points are projected onto the vertical plane and the line of best fit is determined in this vertical plane by means of regression calculation. Therein, the line of best fit can be determined such that it extends on half the width of a stripe in the vertical plane. Thus, by the line of best fit, not only the respective height coordinate of the environmental points is considered, but also the distance coordinate in vehicle longitudinal direction and/or vehicle transverse direction. The line of best fit thus determined can therein be inclined along the vehicle longitudinal direction and/or the vehicle transverse direction. The inclination or slope of the line of best fit in vehicle transverse direction can be used as an additional criterion for determining the area of the inclination. In particular, the capability of being passed of the area for the motor vehicle can be evaluated based on the slope of the line of best fit.

Particularly preferably, the height value of a stripe is determined as the mean value of the height coordinates of the environmental points associated with the stripe. Thus, the height value describes an average height of each stripe above the reference plane. Thus, illustratively, each stripe can be shifted parallel to the reference plane and be lifted to the height value. In an inclination in the form of a positive slope, therefore, a stepped extension of the stripes arises. For determining the mean value, for example, a line of best fit can be determined, which extends perpendicularly to the predetermined direction at a level of the height value. A distance of the line of best fit to the reference plane thus corresponds to the height value. In that the line of best fit extends perpendicularly to the predetermined direction, each point on the line of best fit can be used for determining the height value. Thus, the method is particularly simply configured.

The invention additionally relates to a driver assistance system for a motor vehicle with a capturing device and a control device, which is adapted to perform a method according to the invention. In particular, the capturing device has a camera and/or an ultrasonic sensor and/or a radar sensor. For example, the driver assistance system can be adapted to automatically brake the motor vehicle in an impending collision with an obstacle. Thereto, the driver assistance system can first capture if an inclination or an inclined plane is in the first roadway area. Thus, ground points, thus environmental points, associated with the inclined plane can be prevented from being erroneously recognized as object points or object points can be prevented from being erroneously recognized as ground points and thereupon the motor vehicle can be prevented from being either erroneously braked or not braked. In addition, the driver assistance system can classify an area of the inclination as passable or impassable for the motor vehicle.

A motor vehicle according to the invention includes a driver assistance system according to the invention. The motor vehicle is in particular formed as a passenger car.

The preferred embodiments presented with respect to the method according to the invention and the advantages thereof correspondingly apply to the driver assistance system according to the invention as well as to the motor vehicle according to the invention.

With indications of "in front of", "behind", "ascending", "descending", "vertical", "horizontal", "forward direction", "rearward direction", "direction of travel" (9), "vehicle longitudinal direction" (L), "vehicle transverse direction" (Q), "vehicle vertical direction" (V), etc., the positions and orientations given with an observer standing in front of the motor vehicle and looking in the direction of travel of the motor vehicle are specified.

Further features of the invention are apparent from the claims, the figures and the description of figures.

Now, the invention is explained in more detail based on preferred embodiments as well as with reference to the attached drawings.

There show:
- Fig. 1: a schematic representation of an embodiment of a motor vehicle according to the invention;
- Fig. 2: the motor vehicle according to Fig. 1, which is on a roadway, wherein two objects are located in front of the motor vehicle in direction of travel of the motor vehicle;
- Fig. 3: the motor vehicle and the objects according to Fig. 2, wherein the roadway has an ascent;
- Fig. 4: the motor vehicle and the objects according to Fig. 2, wherein the roadway has a descent;
- Fig. 5: the motor vehicle according to Fig. 1 on a roadway in a perspective representation, wherein a first roadway area has an ascent;
- Fig. 6: the motor vehicle on the roadway according to Fig. 5 in a plan view, wherein the first roadway area is divided in stripes;
- Fig. 7: the representation according to Fig. 6 in a perspective representation;
- Fig. 8: the representation according to Fig. 6 and 7 in a side view; and
- Fig. 9: a flow diagram of an embodiment of a method according to the invention.

In the figures, identical as well as functionally identical elements are provided with the same reference characters.

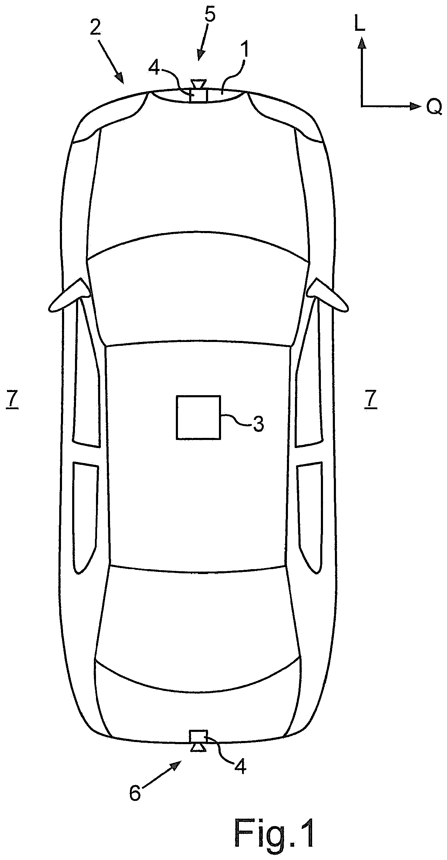

Fig. 1 shows a motor vehicle 1 according to an embodiment of the present invention in a plan view. In the present case, the motor vehicle 1 is formed as a passenger car. The motor vehicle 1 includes a driver assistance system 2, which serves for assisting a driver of the motor vehicle 1 in driving the motor vehicle 1. The driver assistance system 2 includes a control device 3, which can for example be formed by a vehicle-side controller. Moreover, the driver assistance system 2 includes a capturing device 4, which comprises a camera in the present case. Alternatively or additionally, the capturing device 4 can have an ultrasonic sensor and/or a radar sensor.

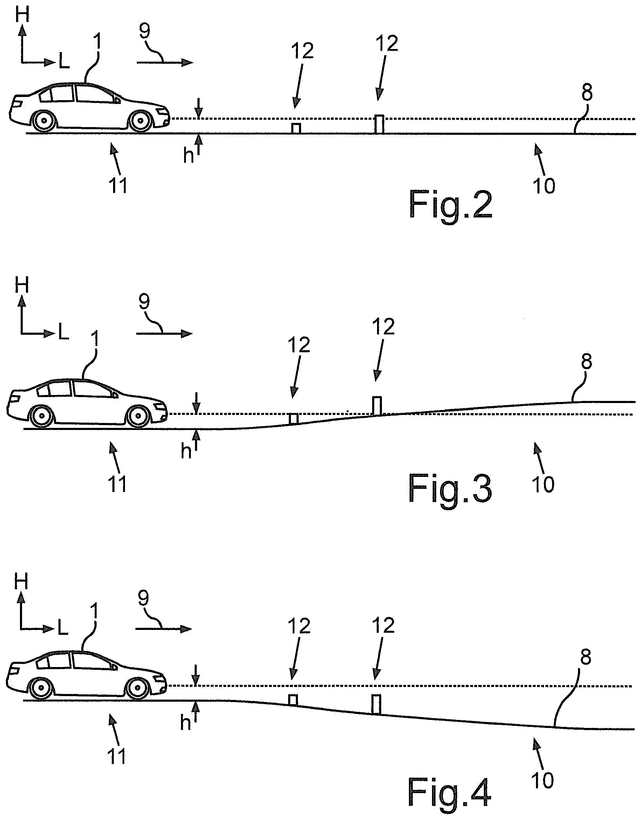

In the present embodiment, the driver assistance system 2 includes a first capturing device 4 in a front area 5 of the motor vehicle 1 and a second capturing device 4 in a rear area 6 of the motor vehicle 1. Also, further capturing devices 4 can be provided at side mirrors of the motor vehicle 1 or in place of side mirrors of the motor vehicle 1 The capturing devices 4 serve for monitoring an environmental region 7 of the motor vehicle 1 and for example capturing objects 12 (see Fig. 2 and Fig. 3) in the environmental region 7. After capturing the objects 12, the driver assistance system 2 can for example automatically brake the motor vehicle 1 to prevent a collision of the motor vehicle 1 with the objects 12.

Fig. 2 shows the motor vehicle 1 in a side view, which advances on a roadway 8 in a direction of travel 9. Here, the motor vehicle 1 moves in a forward direction such that the direction of travel 9 is oriented in a vehicle longitudinal direction L. The roadway 8 has a first roadway area 10 as well as a second roadway area 11. The motor vehicle 1 is located on the second roadway area 11. The first roadway area 10 is formed adjoining to the second roadway area 11 and is in front of the second roadway area 11 in a predetermined direction, which here corresponds to a viewing direction of the capturing device 4 arranged in the front area 5 and thus to the direction of travel 9 of the motor vehicle 1. In addition, two objects 12 are located on the first roadway area 10 in front of the motor vehicle 1 in direction of travel 9.

Further, a threshold value h for a height of the objects 12 is drawn. This threshold value h can for example be in a range between 10 centimeters and 25 centimeters. Therein, the object 12, which is disposed closer to the motor vehicle 1, has a height, which is lower than the threshold value h. This means that the object 12 located closer to the motor vehicle 1 is passable by the motor vehicle 1. The object 12 located more distant from the motor vehicle 1 has a height, which exceeds the threshold value h, and thereupon is identified as an obstacle for the motor vehicle 1.

Compared hereto, Fig. 3 shows an example, in which the first roadway area 10 is inclined with respect to the second roadway area 11 at least in certain areas. Here, the first roadway area 10 has a positive slope. Here, the objects 12 are located on the inclination of the first roadway area 10. Thereby, the heights of both objects 12 exceed the threshold value h. This entails that the object 12 located closer to the motor vehicle 1 too is erroneously recognized as an obstacle for the motor vehicle 1 and thereupon it is for example braked upon this object 12. Fig. 4 shows an example, in which the first roadway area 10 is also inclined with respect to the second roadway area 11 at least in certain areas, wherein the first roadway area 10 here has a descent. Therein, the heights of the objects 12 located on the descent of the first roadway area 10 fall below the threshold value h and are thus not identified as obstacles. Therefore, collision with the impassable obstacle 12 can impend since the driver assistance system 2 does not identify the more distant object 12 as an obstacle.

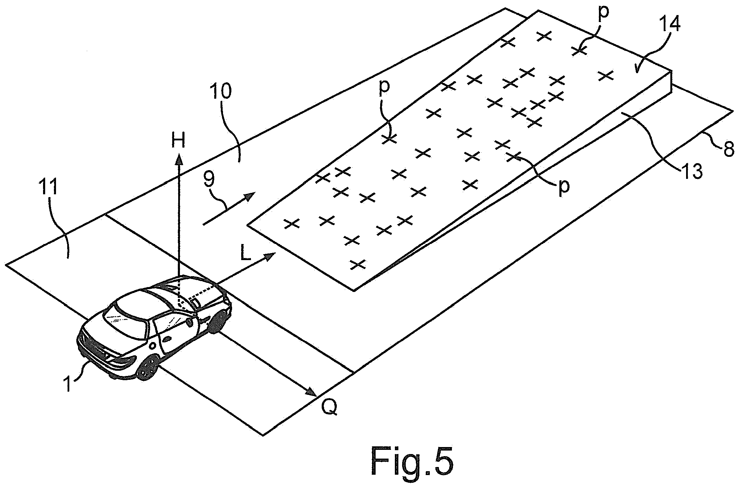

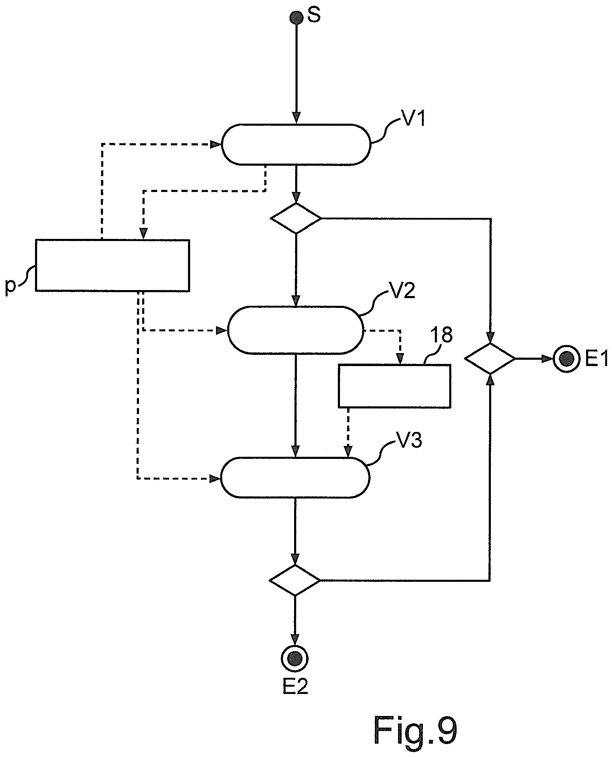

In order to prevent this, an inclination 13, as it is exemplarily shown in Fig. 5, is to be recognized in the first roadway area 10. If the inclination 13 is present in the first roadway area 10, it is to be classified as passable or impassible for the motor vehicle 1. Such an inclination 13 passable for the motor vehicle 1 can for example be a ramp or ascent in a multi-level parking garage and therein be situated in front of or behind the motor vehicle 1 in the direction of travel 9 of the motor vehicle 1. Here, the predetermined direction is thus the direction of travel 9 or the vehicle longitudinal direction L. Such an inclination 13 can also be a ramp in a longitudinal parking space, which can be situated beside the motor vehicle 1. Here, the predetermined direction is thus the vehicle transverse direction Q. Thereto, a method can be performed, as it is shown based on the flow diagram according to Fig. 9. After the start S of the method, in a first method step V1, a so-called fast test is performed, based on which it can be determined if the inclination 13 is in the first roadway area 10. Therein, the fast test is performed depending on environmental points p or 3D points, which have been captured by the vehicle-side capturing device 4. The environmental points p are in particular environmental points p of the first roadway area 10 and include points on a surface 14 of the first roadway area 10 or the inclination 13. The environmental points p can for example be transformed into a vehicle coordinate system comprising the vehicle longitudinal direction L, the vehicle transverse direction Q and a vehicle vertical direction H and be provided for the fast test. This means that each environmental point p can be identified based on distance coordinates associated with the vehicle longitudinal direction L and the vehicle transverse direction Q and based on a height coordinate associated with the vehicle vertical direction H. Therein, the distance coordinates describe a distance of an environmental point p to the motor vehicle 1. By the distance coordinates, thus, the position of a projection of an environmental point p onto the plane spanned by the vehicle longitudinal direction L and the vehicle transverse direction Q is specified. Therein, the height coordinate of an environmental point p describes the heights of the environmental point p above the spanned plane.

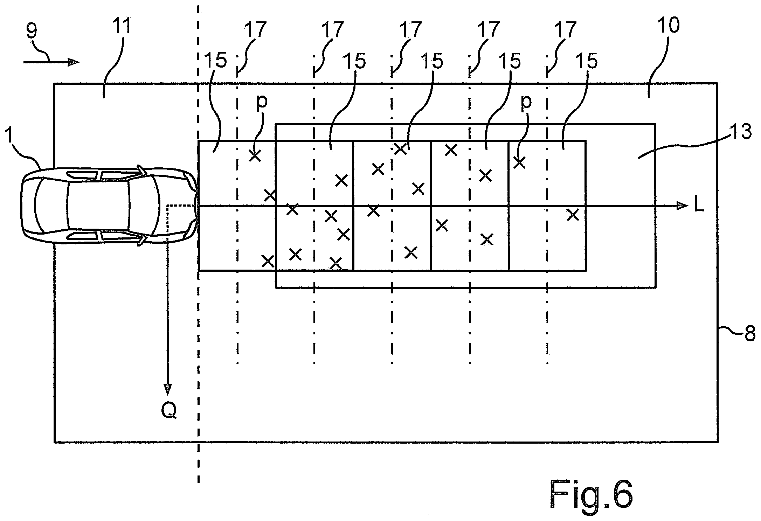

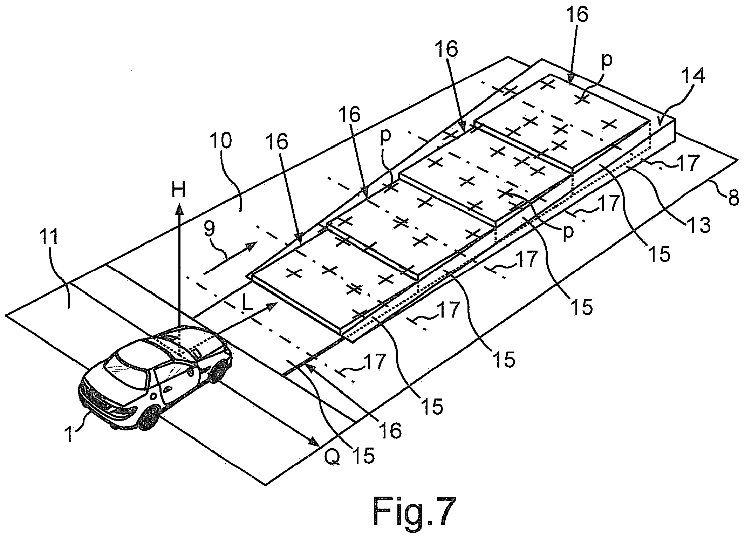

For performing the fast test, in the case of the inclination 13 situated in front of the motor vehicle 1 in the direction of travel 9, the first roadway area 10 is divided into stripes 15 along the direction of travel 9, as it is shown in plan view of the roadway 8 and the motor vehicle 1 according to Fig. 6 as well as in the perspective representation of the roadway 8 and the motor vehicle 1 according to Fig. 7, which here extend transversely to the direction of travel 9. Here, each stripe 15 is rectangularly formed, wherein the stripes 15 here extend parallel to the vehicle transverse direction Q. In particular, the first roadway area 10 is divided into ten stripes 15, wherein each stripe has a width of ca. 50 centimeters.

The environmental points p captured by the vehicle-side capturing device 4 are first associated each with one of the stripes 15 based on their distance coordinates or their horizontal coordinates. Otherwise stated, the stripes 15 are filled with the captured environmental points p. In addition, based on the height coordinates of the environmental points p associated with a stripe 15, a height value 16 is determined for each stripe 15. If the inclination 13, as shown here, has a positive slope, thus, the height values 16 continuously increase.

For determining the height values 16, for example, a line of best fit 17 can respectively be determined for each stripe 15. By the line of best fit 17, which is here in particular determined depending on the distance coordinates associated with the vehicle transverse direction Q as well as the height coordinates of the environmental points p, the environmental points p are approximated at the best. Here, the line of best fit 17 is determined extending parallel to the vehicle transverse direction Q, wherein the height of the line of best fit 17 above the second roadway area 11 forms the height value. Thus, the height value 16 is here specified as the mean value, which is determined based on the height coordinates of the environmental points p associated with the stripe 15. The height value 16 of a stripe 15 thus describes the average height of the stripe 15. In the positively increasing inclination 13, a step-like extension of the stripes 15 thus arises, as shown in Fig. 7.

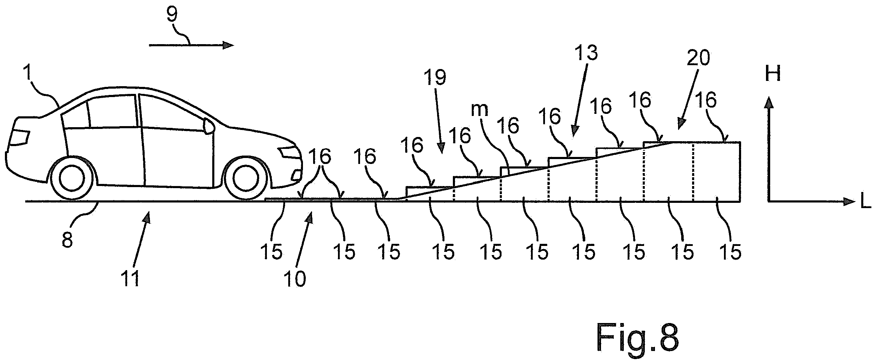

Between the height values 16 of two adjacent stripes 15, then, a slope value m (see Fig. 8) can respectively be determined and compared to a first slope limit value. If at least one determined slope value m exceeds the first slope limit value, which is for example 5 %, thus, the inclination 13 is recognized. Thereto, the stripes 15 can for example each be examined in pairs by consecutively determining the slope value m for each two stripes 15 starting from the motor vehicle 1. As soon as the slope value m exceeds the first slope limit value for the first time, the inclination 13 is recognized. Thus, as shown in Fig. 8, a first slope value m can for example be determined for a first stripe pair comprising the first stripe 15 and the second stripe 15 viewed from the motor vehicle 1 and compared to the slope limit value. Since the first and the second stripe 15 are on one level, the first slope value m is here 0 % and thus falls below the first slope limit value. Then, a second slope value m is determined for a second stripe pair comprising the second stripe 15 and the third stripe 15 and compared to the first slope limit value, etc. Here, the slope value m of a fourth stripe pair comprising the fourth stripe 15 and the fifth stripe 15 exceeds the first slope limit value for the first time. Thereby, the inclination 13 is recognized and at the same time one of the stripes 15 of the fourth stripe pair, here the fourth stripe 15, is determined as located at the beginning 19 of the inclination 13. If each stripe 15 for example has a width of 50 centimeters, thus, the beginning 19 of the inclination 13 is in the distance of two meters away from the motor vehicle 1. Starting from the beginning 19, then, the slope values m for the following stripe pairs are determined. As soon as the slope value m of a stripe pair again falls below the first slope limit value, an end 20 of the inclination 13 is recognized. Here, the slope value m of the ninth stripe pair comprising the ninth stripe 15 and the tenth stripe 15 again falls below the first slope limit value since the ninth and the tenth stripe 15 are on one level. Thereby, one of the stripes 15 of the ninth stripe pair, here the ninth stripe 15, is determined as located at the end 20 of the inclination. If after the beginning of the inclination 13, a stripe pair does not follow anymore, the slope value m of which falls below the first slope limit value, the last stripe 15, thus here the tenth stripe 15, is determined as located at the end 20 of the inclination 13.

However, the inclination 13 is only recognized if an mean slope value and/or a maximum slope value of two stripes 15 fall below a respective further, predetermined slope limit value, for example 20 %. For determining the mean slope value, first, an overall slope value of all of the stripes 15 between the beginning 19 and the end 20 is determined by summing up all of the slope values m. Then, the mean slope value is calculated from this overall slope value.

Thus, only if at least one of the slope values m exceeds the first slope limit value as well as the mean slope value and/or the maximum slope value fall below the respective further slope limit value, the inclination 13 is recognized and parameters 18 of the inclination 13 are determined in a second method step V2. Otherwise, it is captured as a first result E1 that an inclination 13 passable for the motor vehicle 1 is not in the first roadway area 10.

Such a parameter 18 determined in step V2 can for example be the area 14 of the inclination 13. Therein, both the size of the area 14 and the position of the area 14 with respect to the second roadway area 11 is determined. The area 14 can for example be determined by regression calculation from the environmental points p. Then, in a third method step V3, a dispersion measure is determined based on the environmental points p and the area 14, and it is determined whether or not the area 14 is passable for the motor vehicle 1 based on the dispersion measure. Otherwise stated, the area 14 is classified. The dispersion measure can for example be a standard deviation and/or a variance. If the dispersion measure falls below a predetermined dispersion limit value, thus, the area 14 is classified as passable for the motor vehicle 1 and the presence of the inclination 13 as well as the capability of being passed of the area 14 is determined as a second result value E2. Otherwise, the area 14 is classified as impassable for the motor vehicle 1 and thereupon the first result value E1 is again provided.

## Claims

1. Method for recognizing an inclination (13) in a first roadway area (10) with respect to a second roadway area (11) adjoining ttrthe first roadway area (10), on which a motor vehicle (1) is located, wherein the first roadway area (10) is disposed located in front of the second roadway area (11) along a predetermined direction starting from the motor vehicle (1) and wherein in the method
- the first roadway area (10) is divided into a predetermined number of stripes (15) along the predetermined direction;
- environmental points (p) captured by a vehicle-side capturing device (4) are each associated with one of the stripes (15) based on their distance coordinates describing a distance of the respective environmental point (p) to the motor vehicle (1);
- a height value (16) is respectively determined for the stripes (15) based on height coordinates of the environmental points (p) associated with the stripe (15);
- a slope value (m) between the associated height values (16) along the predetermined direction is respectively determined for respective stripe pairs comprising two stripes (15), and
- the inclination (13) is recognized if at least one of the determined slope values (m) exceeds a predetermined first slope limit value.

2. Method according to claim 1,
**characterized in that**
starting from the motor vehicle (1) along the predetermined direction, the respective slope value (m) is consecutively determined for each one stripe pair comprising two stripes (15) adjoining to each other and the inclination (13) is recognized as soon as the slope value (m) exceeds the first slope limit value for the first time.

3. Method according to claim 2,
**characterized in that**
the stripe pair, in which the slope value (m) exceeds the first slope limit value for the first time, is determined as a beginning (19) of the inclination (13) facing the second roadway area (11), starting from the beginning (19) of the inclination (13), the respective slope value (m) for each two adjoining stripes (15) is consecutively determined and the stripe pair, in which the slope value (m) again falls below the first slope limit value for the first time, is determined as an end (20) of the inclination (13).

4. Method according to any one of the preceding claims,
**characterized in that**
the slope values (m) are determined for respective stripe pairs comprising two stripes (15) adjoining to each other, an overall slope value is determined based on the slope values (m), which exceed the first slope limit value, an mean slope value is determined based on the overall slope value and the inclination (13) is only recognized if the mean slope value falls below a predetermined second slope limit value.

5. Method according to any one of the preceding claims,
**characterized in that**
the slope values (m) are determined for respective stripe pairs comprising two stripes (15) adjoining to each other, a maximum slope value is determined from the slope values exceeding the first slope limit value and the inclination (13) is only recognized if the maximum slope value falls below a first predetermined third slope limit value.

6. Method according to any one of the preceding claims,
**characterized in that**
after recognizing the inclination (13), an area (14) of the inclination (13) is determined based on the environmental points (p).

7. Method according to claim 6,
**characterized in that**
a dispersion measure, such as a variance and/or a standard deviation of the environmental points, is determined based on the environmental points (p) and the area (14), and the area (14) is classified as passable or impassable for the motor vehicle (1) depending on the dispersion measure.

8. Method according to any one of the preceding claims,
**characterized in that**
the stripes (15) are determined rectangular and extending perpendicularly to the predetermined direction.

9. Method according to any one of the preceding claims,
**characterized in that**
at least ten stripes (15) is preset as the number of stripes (15) and/or a width between 45 centimeters and 1 meter, in particular of 50 centimeters, is preset for each of the stripes (15) along the predetermined direction.

10. Method according to any one of the preceding claims,
**characterized in that**
a line of best fit (17) extending along the stripe (15) is determined for each stripe (15) depending on the height coordinates of the environmental points (p) of the stripe (15) and the height value (16) is determined based on a point on the line of best fit (17).

11. Method according to claim 10,
**characterized in that**
the line of best fit (17) is determined depending on respective distance coordinates associated with a further direction extending perpendicularly to the predetermined direction , and the height coordinates of the environmental points (p) of the respective stripe (15) extending in a vertical plane spanned by the predetermined direction and the further direction.

12. Method according to any one of the preceding claims,
**characterized in that**
the height value (16) of a stripe (15) is determined as the mean value of the height coordinates of the environmental points (p) associated with the stripe (15).

13. Driver assistance system (2) for a motor vehicle (1) with a capturing device (4) and a control device (3), which is adapted to perform a method according to any one of the preceding claims.

14. Driver assistance system (2) according to claim 13,
**characterized in that**
the capturing device (4) comprises a camera and/or a radar sensor and/or an ultrasonic sensor.

15. Motor vehicle (1) with a driver assistance system (2) according to claim 14.

## Patentansprüche

1. Verfahren zum Erkennen einer Neigung (13) in einem ersten Fahrbahnbereich (10) in Bezug auf einen an den ersten Fahrbahnbereich (10) angrenzenden zweiten Fahrbahnbereich (11), auf dem sich ein Kraftfahrzeug (1) befindet, wobei der erste Fahrbahnbereich (10) entlang einer vorbestimmten Richtung ausgehend vom Kraftfahrzeug (1) vor dem zweiten Fahrbahnbereich (11) angeordnet ist und wobei bei dem Verfahren
- der erste Fahrbahnbereich (10) entlang der vorbestimmten Richtung in eine vorbestimmte Anzahl von Streifen (15) unterteilt ist;
- Umgebungspunkte (p), die durch eine fahrzeugseitige Erfassungsvorrichtung (4) erfasst werden, jeweils basierend auf ihren Abstandskoordinaten, die einen Abstand des jeweiligen Umgebungspunkts (p) zum Kraftfahrzeug (1) beschreiben, einem der Streifen (15) zugeordnet werden;
- für die Streifen (15) jeweils ein Höhenwert (16) basierend auf Höhenkoordinaten der Umgebungspunkte (p), die den Streifen (15) zugeordnet sind, ermittelt wird;
- jeweils für jeweilige Streifenpaare, die zwei Streifen (15) umfassen, ein Neigungswert (m) zwischen den zugeordneten Höhenwerten (16) entlang der vorbestimmten Richtung ermittelt wird und
- die Neigung (13) erkannt wird, wenn zumindest einer der ermittelten Neigungswerte (m) einen vorbestimmten ersten Neigungsgrenzwert überschreitet.

2. Verfahren nach Anspruch 1, **dadurch gekennzeichnet, dass**
ausgehend vom Kraftfahrzeug (1) entlang der vorbestimmten Richtung der jeweilige Neigungswert (m) nacheinander für jedes Streifenpaar, das zwei aneinander angrenzende Streifen (15) umfasst, ermittelt wird und die Neigung (13) erkannt wird, sobald der Neigungswert (m) erstmals den ersten Neigungsgrenzwert überschreitet.

3. Verfahren nach Anspruch 2, **dadurch gekennzeichnet, dass**
das Streifenpaar, bei dem der Neigungswert (m) den ersten Neigungsgrenzwert erstmals überschreitet, als ein Anfang (19) der dem zweiten Fahrbahnbereich (11) zugewandten Neigung (13) ermittelt wird, ausgehend vom Anfang (19) der Neigung (13), wobei der jeweilige Neigungswert (m) für jeweils zwei angrenzende Streifen (15) nacheinander ermittelt wird und das Streifenpaar, bei dem der Neigungswert (m) wieder erstmals unter den ersten Neigungsgrenzwert fällt, als ein Ende (20) der Neigung (13) ermittelt wird.

4. Verfahren nach einem der vorangehenden Ansprüche, **dadurch gekennzeichnet, dass**
die Neigungswerte (m) für jeweilige Streifenpaare ermittelt werden, die zwei aneinander angrenzende Streifen (15) umfassen, basierend auf den Neigungswerten (m), die den ersten Neigungsgrenzwert überschreiten, ein Gesamtneigungswert ermittelt wird, basierend auf dem Gesamtneigungswert ein mittlerer Neigungswert ermittelt wird und die Neigung (13) nur erkannt wird, wenn ein mittlerer Neigungswert unter einen vorbestimmten zweiten Neigungsgrenzwert fällt.

5. Verfahren nach einem der vorangehenden Ansprüche, **dadurch gekennzeichnet, dass**
die Neigungswerte (m) für jeweilige Streifenpaare ermittelt werden, die zwei aneinander angrenzende Streifen (15) umfassen, aus den Neigungswerten, die den ersten Neigungsgrenzwert überschreiten, ein maximaler Neigungswert ermittelt wird und die Neigung (13) nur erkannt wird, wenn der maximale Neigungswert unter einen vorbestimmten dritten Neigungsgrenzwert fällt.

6. Verfahren nach einem der vorangehenden Ansprüche,
**dadurch gekennzeichnet, dass**
nach dem Erkennen der Neigung (13) eine Fläche (14) der Neigung (13) basierend auf den Umgebungspunkten (p) ermittelt wird.

7. Verfahren nach Anspruch 6, **dadurch gekennzeichnet, dass**
basierend auf den Umgebungspunkten (p) und der Fläche (14) ein Streuungsmaß, wie etwa eine Varianz und/oder eine Standardabweichung der Umgebungspunkte, ermittelt wird und die Fläche (14) in Abhängigkeit vom Streuungsmaß als für das Kraftfahrzeug (1) befahrbar oder nicht befahrbar eingestuft wird.

8. Verfahren nach einem der vorangehenden Ansprüche,
**dadurch gekennzeichnet, dass**
die Streifen (15) als rechteckig bestimmt werden und sich senkrecht zu der vorbestimmten Richtung erstrecken.

9. Verfahren nach einem der vorangehenden Ansprüche,
**dadurch gekennzeichnet, dass**
zumindest zehn Streifen (15) als die Anzahl von Streifen (15) voreingestellt sind und/oder eine Breite zwischen 45 Zentimetern und 1 Meter, insbesondere von 50 Zentimetern, für jeden der Streifen (15) entlang der vorbestimmten Richtung voreingestellt ist.

10. Verfahren nach einem der vorangehenden Ansprüche,
**dadurch gekennzeichnet, dass**
für jeden Streifen (15) in Abhängigkeit von den Höhenkoordinaten der Umgebungspunkte (p) des Streifens (15) eine Ausgleichsgerade (17) ermittelt wird, die sich entlang der Streifen (15) erstreckt, und der Höhenwert (16) basierend auf einem Punkt auf der Ausgleichsgeraden (17) ermittelt wird.

11. Verfahren nach Anspruch 10, **dadurch gekennzeichnet, dass**
die Ausgleichsgerade (17) in Abhängigkeit von jeweiligen Abstandskoordinaten, die einer weiteren Richtung zugeordnet sind, die sich senkrecht zu der vorbestimmten Richtung erstreckt, und den Höhenkoordinaten der Umgebungspunkte (p) des jeweiligen Streifens (15), die sich in einer vertikalen Ebene erstrecken, die durch die vorbestimmte Richtung und die weitere Richtung gespannt wird, ermittelt wird.

12. Verfahren nach einem der vorangehenden Ansprüche,
**dadurch gekennzeichnet, dass**
der Höhenwert (16) eines Streifens (15) als der Mittelwert der Höhenkoordinaten der Umgebungspunkte (p), die dem Streifen (15) zugeordnet sind, ermittelt wird.

13. Fahrerassistenzsystem (2) für ein Kraftfahrzeug (1) mit einer Erfassungsvorrichtung (4) und einer Steuervorrichtung (3), das dazu ausgelegt ist, ein Verfahren nach einem der vorangehenden Ansprüche auszuführen.

14. Fahrerassistenzsystem (2) nach Anspruch 13, **dadurch gekennzeichnet, dass**
die Erfassungsvorrichtung (4) eine Kamera und/oder einen Radarsensor und/oder einen Ultraschallsensor umfasst.

15. Kraftfahrzeug (1) mit einem Fahrerassistenzsystem (2) nach Anspruch 14.

## Revendications

1. Procédé de reconnaissance d'une inclinaison (13) dans une première zone de chaussée (10) par rapport à une seconde zone de chaussée (11) adjacente à la première zone de chaussée (10), sur laquelle un véhicule automobile (1) est situé, la première zone de chaussée (10) étant située devant la seconde zone de chaussée (11) le long d'une direction prédéfinie commençant au véhicule automobile (1) et dans le procédé
la première zone de chaussée (10) étant divisée en un nombre prédéfini de bandes (15) le long de la direction prédéfinie ;
des points environnementaux (p) capturés par un dispositif de capture (4) côté véhicule étant chacun associés à l'une des bandes (15) sur la base de leurs coordonnées de distance décrivant une distance du point environnemental (p) respectif au véhicule automobile (1) ;
une valeur de hauteur (16) étant respectivement déterminée pour les bandes (15) sur la base des coordonnées de hauteur des points environnementaux (p) associés à la bande (15) ;
une valeur de pente (m) entre les valeurs de hauteur (16) associées le long de la direction prédéfinie étant respectivement déterminée pour des paires de bandes respectives comprenant deux bandes (15), et
l'inclinaison (13) étant reconnue si au moins une des valeurs de pente (m) déterminées dépasse une première valeur limite de pente prédéfinie.

2. Procédé selon la revendication 1,
**caractérisé en ce que**
à partir du véhicule automobile (1) dans la direction prédéfinie, la valeur de pente (m) respective est déterminée consécutivement pour chaque paire de bandes comprenant deux bandes (15) adjacentes l'une à l'autre et l'inclinaison (13) est reconnue dès que la valeur de pente (m) dépasse pour la première fois la première valeur limite de pente.

3. Procédé selon la revendication 2,
**caractérisé en ce que**
la paire de bandes, dans laquelle la valeur de pente (m) dépasse pour la première fois la première valeur limite de pente, est déterminée comme un début (19) de l'inclinaison (13) faisant face à la seconde zone de chaussée (11), à partir du début (19) de l'inclinaison (13), la valeur de pente (m) respective pour deux bandes (15) adjacentes est consécutivement déterminée et la paire de bandes, dans laquelle la valeur de pente (m) tombe à nouveau pour la première fois sous la première valeur limite de pente, est déterminée comme une fin (20) de l'inclinaison (13).

4. Procédé selon l'une quelconque des revendications précédentes,
**caractérisé en ce que**
les valeurs de pente (m) sont déterminées pour des paires de bandes respectives comprenant deux bandes (15) adjacentes l'une à l'autre, une valeur de pente globale est déterminée sur la base des valeurs de pente (m) qui dépassent la première valeur limite de pente, une valeur de pente moyenne est déterminée sur la base de la valeur de pente globale et l'inclinaison (13) n'est reconnue que si la valeur de pente moyenne tombe en dessous d'une deuxième valeur limite de pente prédéfinie.

5. Procédé selon l'une quelconque des revendications précédentes,
**caractérisé en ce que**
les valeurs de pente (m) sont déterminées pour des paires de bandes respectives comprenant deux bandes (15) adjacentes l'une à l'autre, une valeur de pente maximale est déterminée à partir des valeurs de pente dépassant la première valeur limite de pente et l'inclinaison (13) n'est reconnue que si la valeur de pente maximale tombe en dessous d'une première troisième valeur limite de pente prédéfinie.

6. Procédé selon l'une quelconque des revendications précédentes,
**caractérisé en ce que**
après avoir reconnu l'inclinaison (13), une zone (14) de l'inclinaison (13) est déterminée sur la base des points environnementaux (p).

7. Procédé selon la revendication 6,
**caractérisé en ce que**
une mesure de dispersion, telle qu'une variance et/ou un écart type des points environnementaux, est déterminée sur la base des points environnementaux (p) et de la zone (14), et la zone (14) est classée comme praticable ou impraticable pour le véhicule automobile (1) en fonction de la mesure de dispersion.

8. Procédé selon l'une quelconque des revendications précédentes,
**caractérisé en ce que**
les bandes (15) sont déterminées rectangulaires et s'étendent perpendiculairement à la direction prédéfinie.

9. Procédé selon l'une quelconque des revendications précédentes,
**caractérisé en ce que**
au moins dix bandes (15) sont préréglées comme le nombre de bandes (15) et/ou une largeur comprise entre 45 centimètres et 1 mètre, en particulier 50 centimètres, est préréglée pour chacune des bandes (15) le long de la direction prédéfinie.

10. Procédé selon l'une quelconque des revendications précédentes,
**caractérisé en ce que**
une ligne de meilleur ajustement (17) s'étendant le long de la bande (15) est déterminée pour chaque bande (15) en fonction des coordonnées de hauteur des points environnementaux (p) de la bande (15) et la valeur de hauteur (16) est déterminée sur la base d'un point sur la ligne de meilleur ajustement (17).

11. Procédé selon la revendication 10,
**caractérisé en ce que**
la ligne de meilleur ajustement (17) est déterminée en fonction des coordonnées de distance respectives associées à une autre direction s'étendant perpendiculairement à la direction prédéfinie, et des coordonnées de hauteur des points environnementaux (p) de la bande (15) respective s'étendant dans un plan vertical couvert par la direction prédéfinie et l'autre direction.

12. Procédé selon l'une quelconque des revendications précédentes,
**caractérisé en ce que**
la valeur de hauteur (16) d'une bande (15) est déterminée comme la valeur moyenne des coordonnées de hauteur des points environnementaux (p) associés à la bande (15).

13. Système d'aide à la conduite (2) pour un véhicule automobile (1) avec un dispositif de capture (4) et un dispositif de commande (3), qui est conçu pour exécuter un procédé selon l'une quelconque des revendications précédentes.

14. Système d'aide à la conduite (2) selon la revendication 13,
**caractérisé en ce que**
le dispositif de capture (4) comprend une caméra et/ou un capteur radar et/ou un capteur à ultrasons.

15. Véhicule à moteur (1) avec un système d'aide à la conduite (2) selon la revendication 14.
